# EUROPEAN PATENT APPLICATION

(11) **EP 4 831 328 A1**
(43) Date of publication of application: **28.10.2026**
(21) Application number: 25786387.8
(22) Date of filing: 28.03.2025
(51) Int. Cl.: C22C 38/00, C21D 9/46, C22C 38/50, C22C 38/54, C25B 1/04, C25B 9/00, C25B 9/23, C25B 9/65

(54) **STAINLESS STEEL MATERIAL FOR SOLID OXIDE TYPE WATER ELECTROLYSIS**

(30) Priority: 11.04.2024 JP 2024064236
(71) Applicant: Nippon Steel Corporation, Tokyo 100-8071 (JP)
(72) Inventor: HATANO,Masaharu, Tokyo 100-0005 (JP); MATSUMOTO,Mitsuki, Tokyo 100-0005 (JP)
(74) Representative: J A Kemp LLP
(86) International application number: PCT/JP2025/013014
(87) International publication number: WO 2025/216104

(57) **Abstract**

A stainless steel for solid oxide electrolysis cells contains, on a mass basis, C: 0.030% or less, Si: 0.20% or less, Mn: less than 0.30%, P: 0.050% or less, S: 0.0030% or less, Cr: from 19.0% to 24.0%, Mo: 2.5% or less, Al: from 0.01% to 0.15%, Mg: from 0.0001% to 0.0100%, N: 0.030% or less, Nb: 0.40% or less, Ti: 0.40% or less, Ni: 1.00% or less, and Cu: 1.00% or less, with the balance being Fe and impurities. In the stainless steel for solid oxide electrolysis cells, an average particle diameter of inclusions is from 0.2 µm to 3.0 µm, a number density of the inclusions is from 30 to 150 particles/mm², an aspect ratio of the inclusions is more than 1.0 and less than 3.0, and a proportion, among inclusions, of Mg-containing inclusions having an Mg concentration of 0.5 mass% or more is 0.30 or more.

## Description

### [Technical Field]

The present invention relates to a stainless steel for solid oxide electrolysis cells.

### [Background Art]

In recent years, the development and introduction of hydrogen production technologies by CO₂-free water electrolysis have been accelerating. In particular, water electrolysis technology using solid oxide electrolysis (SOE) (hereinafter referred to as "solid oxide water electrolysis") has been attracting attention because it offers the highest hydrogen production efficiency (e.g., Patent Literature 1).
The solid oxide water electrolysis generates hydrogen by bringing steam to a high-temperature state to promote water electrolysis. Consequently, components used in solid oxide water electrolysis are exposed to a high-temperature environment containing steam and hydrogen. Although stainless steels are being considered as a material for these components, in a high-temperature environment containing steam and hydrogen, oxidation and thermal deformation are likely to occur due to proton (H⁺) penetration into the stainless steels.

On the other hand, solid oxide fuel cells (SOFCs), which generate electricity from hydrogen reformed from city gas and the like and from air, are known as a technology similar to solid oxide water electrolysis. Stainless steels with improved electrical conductivity at high temperatures, resistance to chromium poisoning, thermal deformation, and the like are used for components of solid oxide fuel cells (e.g., Patent Literatures 2 to 5).

### [Citation List]

### [Patent Literatures]

[PTL 1] Japanese Patent Application Publication No. 2022-119078 A
[PTL 2] Japanese Patent No. 5716054 B
[PTL 3] Japanese Patent No. 6643906 B
[PTL 4] WO 2022/153752 A1
[PTL 5] Japanese Patent Application Publication No. 2022-136911 A

### [Summary of Invention]

### [Technical Problem]

As described above, stainless steels used for solid oxide water electrolysis are exposed to a high-temperature environment containing steam and hydrogen, and consequently, oxidation and thermal deformation due to proton (H⁺) penetration into the stainless steels are likely to occur. On the other hand, stainless steels used for solid oxide fuel cells are not exposed to a high-temperature environment containing steam and hydrogen, and therefore, the aforementioned problems have not been specifically addressed.

The present invention has been made to solve the aforementioned problems specific to stainless steels used for solid oxide water electrolysis, and an object thereof is to provide a stainless steel for solid oxide electrolysis cells that can suppress oxidation and thermal deformation associated with proton (H⁺) penetration.

### [Solution to Problem]

As a result of intensive studies to solve the aforementioned problems, the present inventors have found that the aforementioned problems can be solved by controlling the inclusions in the stainless steel, in addition to controlling its composition, and they have completed the present invention.

Thus, the present invention is a stainless steel for solid oxide electrolysis cells, comprising, on a mass basis, C: 0.030% or less, Si: 0.20% or less, Mn: less than 0.30%, P: 0.050% or less, S: 0.0030% or less, Cr: from 19.0% to 24.0%, Mo: 2.5% or less, Al: from 0.01% to 0.15%, Mg: from 0.0001% to 0.0100%, N: 0.030% or less, Nb: 0.40% or less, Ti: 0.40% or less, Ni: 1.00% or less, and Cu: 1.00% or less, with the balance being Fe and impurities,
wherein an average particle diameter of inclusions is from 0.2 µm to 3.0 µm,
a number density of the inclusions is from 30 to 150 particles/mm²,
an aspect ratio of the inclusions is more than 1.0 and less than 3.0, and
a proportion, among the inclusions, of Mg-containing inclusions having an Mg concentration of 0.5 mass% or more is 0.30 or more.

### [Advantageous Effects of Invention]

According to the present invention, it is possible to provide a stainless steel for solid oxide electrolysis cells that can suppress oxidation and thermal deformation associated with proton (H⁺) penetration.

### [Brief Description of Drawings]

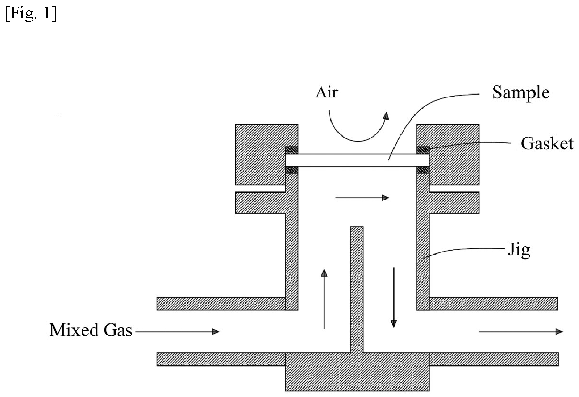

[Fig. 1] Fig. 1 is a schematic view for explaining an oxidation resistance test in Examples.

### [Description of Embodiments]

Oxidation in a high-temperature environment containing steam and hydrogen is considered to be caused by high-temperature steam oxidation that occurs when hydrogen diffuses through stainless steels as protons (H⁺) and reacts with oxygen on the air-side surface to form steam. Furthermore, thermal deformation in a high-temperature environment containing steam and hydrogen is considered to be caused by hydrogen dissolved in solid solution in stainless steels lowering the yield stress of the stainless steels (increasing the mobility of dislocations).

To suppress these phenomena, it is effective to trap protons with inclusions in the stainless steels. In particular, it has been found that inclusions containing Mg are effective as proton trap sites, and that the effect of carbonitrides is particularly significant.

Furthermore, it has been found that the addition of Mg and control of a heating temperature during hot rolling and a coiling temperature after hot rolling are effective for forming such inclusions. It should be noted that merely adding Mg may promote the formation of coarse oxides, which may lead to inhibition of hot workability and deterioration of properties due to the formation of hydrogen accumulation sites.

The present invention has been completed based on these findings.

Hereinafter, embodiments of the present invention will be specifically described. It should be understood that the invention is not limited to the following embodiments, and those which have appropriately added changes, improvements and the like to the following embodiments based on knowledge of a person skilled in the art without departing from the spirit of the invention fall within the scope of the invention.

Here, the "%" expression regarding components as used herein means "% by mass" unless otherwise specified.

As used herein, a numerical range expressed using "to" means a range including numerical values described before and after "to" as a lower limit value and an upper limit value, unless otherwise specified. Further, as used herein, a numerical range where a numerical value is accompanied by "more than" or "less than" means a range that does not include the numerical value as a lower limit or an upper limit.

Also, regarding the numerical ranges described stepwise as described herein, the upper limit of a certain stepwise numerical range may be replaced with the upper limit of another stepwise numerical range or a value shown in Examples. Also, regarding the numerical ranges described stepwise as described herein, the lower limit of a certain stepwise numerical range may be replaced with the lower limit of another stepwise numerical range or a value shown in Examples. Furthermore, a numerical range obtained by combining any of the upper limit values and lower limit values described in this specification may also be employed.

The stainless steel for solid oxide electrolysis cells according to an embodiment of the present invention (hereinafter abbreviated as a "stainless steel") has a composition containing, on a mass basis, C: 0.030% or less, Si: 0.20% or less, Mn: less than 0.30%, P: 0.050% or less, S: 0.0030% or less, Cr: from 19.0% to 24.0%, Mo: 2.5% or less, Al: from 0.01% to 0.15%, Mg: from 0.0001% to 0.0100%, N: 0.030% or less, Nb: 0.40% or less, Ti: 0.40% or less, Ni: 1.00% or less, and Cu: 1.00% or less, with the balance being Fe and impurities.

The term "impurities" as used herein means components that are mixed in due to various factors including raw materials such as ore and scrap and manufacturing steps when industrially producing ferritic stainless steels, and that are acceptable within a range that does not adversely affect the present invention. For example, the impurities include unavoidable impurities.

Also, the term "stainless steel" as used herein means a material formed of stainless steel, and a shape of the material is not particularly limited. Examples of the shape of the material include a sheet shape (including a strip shape), a rod shape, and a tubular shape. Further, the material may be various shaped steels having cross-sectional shapes such as T-shape and I-shape.

In addition, with respect to the content of each element as used herein, containing or comprising "xx % or less" means that it contains xx % or less but contains an amount more than 0% (especially, more than the impurity level).

Furthermore, the stainless steel according to an embodiment of the present invention may further contain, as necessary, one or more selected from B: 0.0050% or less, Ca: 0.0100% or less, V: 0.50% or less, Co: 0.50% or less, W: 0.50% or less, Sn: 0.50% or less, Zr: 0.500% or less, Ga: 0.050% or less, Hf: 0.10% or less, and REM: 0.10% or less.

Each component will be described in detail below.

### <C: 0.030% or less>

C is an element that affects oxidation and thermal deformation in a high-temperature environment containing steam and hydrogen. When the C content is excessively high, oxidation and thermal deformation due to proton (H⁺) penetration occur. Therefore, the C content is 0.030% or less, preferably 0.020% or less, and more preferably 0.015% or less. On the other hand, the lower limit of the C content is not particularly limited, but reducing the C content requires more time in a refining step, which may increase manufacturing costs. Therefore, the C content is preferably 0.001% or more, and more preferably 0.002% or more.

### <Si: 0.20% or Less>

Si is an element useful as a deoxidizer and improving oxidation resistance, but when the Si content is excessively high, thermal deformation in a high-temperature environment containing steam and hydrogen occurs. Therefore, the Si content is 0.20% or less, preferably 0.19% or less, and more preferably 0.18% or less. On the other hand, the lower limit of the Si content is not particularly limited, but from the viewpoint of obtaining the above effects, it is preferably 0.01% or more, and more preferably 0.02% or more.

### <Mn: less than 0.30%>

Mn is an element that affects oxidation and thermal deformation in a high-temperature environment containing steam and hydrogen. When the Mn content is excessively high, oxidation and thermal deformation due to proton (H⁺) penetration occur. Therefore, the Mn content is less than 0.30%, preferably 0.28% or less, and more preferably 0.26% or less. On the other hand, the lower limit of the Mn content is not particularly limited, but it is preferably 0.01% or more, and more preferably 0.02% or more.

### <P: 0.050% or less>

P is an element that may reduce the toughness of the stainless steel. Therefore, the P content is 0.050% or less, preferably 0.040% or less. On the other hand, the lower limit of the P content is not particularly limited, but reducing the P content requires more time in a refining step, which may increase manufacturing costs. Therefore, the P content is preferably 0.001% or more, and more preferably 0.010% or more.

### <S: 0.0030% or less>

S is an element that may reduce the toughness of the stainless steel. Therefore, the S content is 0.0030% or less, preferably 0.0015% or less. On the other hand, the lower limit of the S content is not particularly limited, but reducing the S content requires more time in a refining step, which may increase manufacturing costs. Therefore, the S content is preferably 0.0001% or more, and more preferably 0.0002% or more.

### <Cr: 19.0 to 24.0%>

Cr is a primary element for forming a passive film on a surface of the stainless steel, and the passive film improves properties such as corrosion resistance and heat resistance. When the Cr content is excessively low, oxidation and thermal deformation due to proton (H⁺) penetration occur, and therefore, the Cr content is 19.0% or more, preferably 19.2% or more. On the other hand, when the Cr content is excessively high, toughness and workability decrease, and therefore, the Cr content is 24.0% or less, preferably 23.8% or less.

### <Mo: 2.5% or less>

Mo is a primary element for strengthening the passive film of the stainless steel, and the passive film improves properties such as corrosion resistance and heat resistance. The Mo is also an effective element for controlling the amount of Mg-containing inclusions formed, since Mo, by being dissolved in solid solution in the stainless steel, increases the activity of Mg and contributes to the formation of Mg-containing inclusions. Furthermore, the Mo is also an element that reduces the coefficient of thermal expansion to provide an effect of suppressing thermal deformation. Therefore, the Mo content is 2.5% or less, preferably 2.4% or less, and more preferably 2.3% or less. On the other hand, the lower limit of the Mo content is not particularly limited. From the viewpoint of obtaining the above effects, the Mo content is preferably 0.1% or more, more preferably more than 0.5%, further preferably 0.6% or more, and particularly preferably 0.7% or more.

### <Al: 0.01% to 0.15%>

Al is an element that affects oxidation and thermal deformation in a high-temperature environment containing steam and hydrogen. When the Al content is excessively low, thermal deformation due to proton (H⁺) penetration is likely to occur, and therefore, the Al content is 0.01% or more, preferably 0.02% or more, and more preferably 0.03% or more. On the other hand, when the Al content is excessively high, AlN serving as an origin of abnormal oxidation is likely to be formed, and the toughness of the stainless steel and the effect of suppressing thermal deformation may be impaired. Therefore, the Al content is 0.15% or less, preferably 0.14% or less.

### <Mg: 0.0001 to 0.0100%>

Mg is an element necessary for forming Mg-containing inclusions that function as trap sites for protons (H⁺). However, when the Mg content is excessively high, the amount of inclusions formed increases, and oxidation and thermal deformation in a high-temperature environment containing steam and hydrogen may occur. Therefore, the Mg content is 0.0100% or less, preferably 0.0080% or less, and more preferably 0.0050% or less. On the other hand, from the viewpoint of obtaining the above effects, the lower limit of the Mg content is 0.0001% or more, preferably 0.0002% or more, and more preferably 0.0003% or more.

### <N: 0.030% or less>

N is an element necessary for forming carbonitrides that function as trap sites for protons (H⁺). However, when the N content is excessively high, N may be combined with Al to form AlN serving as an origin of abnormal oxidation and may reduce the toughness of the stainless steel. Therefore, the N content is 0.030% or less, preferably 0.025% or less, and more preferably 0.020% or less. On the other hand, the lower limit of the N content is not particularly limited, but reducing the N content requires more time in a refining step, which may increase manufacturing costs. Therefore, the N content is preferably 0.001% or more, more preferably 0.003% or more, and further preferably 0.005% or more.

### <Nb: 0.40% or less>

Nb is an element that preferentially bonds with C and N to form Nb carbonitrides. However, when the Nb content is excessively high, the amount of Nb in solid solution that has not been consumed in the formation of Nb carbonitrides increases. As a result, workability and the effect of suppressing thermal deformation may be impaired due to hardening. Therefore, the Nb content is 0.40% or less, preferably 0.35% or less. On the other hand, the lower limit of the Nb content is not particularly limited. From the viewpoint of obtaining the above effects, the Nb content is preferably 0.01% or more, and more preferably 0.05% or more.

### <Ti: 0.40% or less>

Ti, as with Nb, is an element that preferentially bonds with C and N to form Ti carbonitrides. However, when the Ti content is excessively high, Ti carbonitrides become coarse, which serves as an origin, and decreases workability and the effect of suppressing thermal deformation. Therefore, the Ti content is 0.40% or less, preferably 0.35% or less. On the other hand, the lower limit of the Ti content is not particularly limited. From the viewpoint of obtaining the above effects, the Ti content is preferably 0.01% or more, and more preferably 0.05% or more.

### <Ni: 1.00% or less>

Ni is an element that improves the corrosion resistance of the stainless steel and suppresses a decrease in toughness. However, since Ni is an austenite stabilizing element, when the Ni content is excessively high, the coefficient of thermal expansion increases and the effect of suppressing thermal deformation decreases. Therefore, the Ni content is 1.00% or less, preferably 0.80% or less, and more preferably 0.50% or less. On the other hand, the lower limit of the Ni content is not particularly limited. From the viewpoint of obtaining the above effects, the Ni content is preferably 0.01% or more, and more preferably 0.05% or more.

### <Cu: 1.00% or less>

Cu is an element that improves the corrosion resistance and electrical conductivity of the stainless steel. However, since Cu is an austenite stabilizing element, when the Cu content is excessively high, the coefficient of thermal expansion increases and the effect of suppressing thermal deformation decreases. Therefore, the Cu content is 1.00% or less, preferably 0.80% or less, and more preferably 0.50% or less. On the other hand, the lower limit of the Cu content is not particularly limited. From the viewpoint of obtaining the above effects, the Cu content is preferably 0.01% or more, and more preferably 0.03% or more.

### <B: 0.0050% or less>

B is an element effective in increasing grain boundary strength by preferentially concentrating at grain boundaries to improve secondary workability, and is contained in the stainless steel as necessary. However, when the B content is excessive, borides (Cr₂B) at grain boundaries coarsen, decreasing the effect of suppressing thermal deformation. Therefore, the B content is 0.0050% or less, preferably 0.0030% or less. On the other hand, the lower limit of the B content is not particularly limited. From the viewpoint of obtaining the above effects, the B content is preferably 0.0001% or more, and more preferably 0.0002% or more.

### <Ca: 0.0100% or less>

Ca is an element that fixes S to enhance oxidation resistance and promotes the formation of an oxide film, and is contained in the stainless steel as necessary. However, when the Ca content is excessively high, the amount of inclusions formed increases, decreasing the thermal deformation suppression properties. Therefore, the Ca content is 0.0100% or less, preferably 0.0050% or less. On the other hand, the lower limit of the Ca content is not particularly limited. From the viewpoint of obtaining the effects of Ca, the Ca content is preferably 0.0005% or more, and more preferably 0.0010% or more.

### <V: 0.50% or less>

V is an element that improves the strength of the stainless steel without impairing toughness thereof, and is contained in the stainless steel as necessary. However, when the V content is excessively high, workability and toughness may decrease, and costs increase. Therefore, the V content is 0.50% or less, preferably 0.40% or less. On the other hand, the lower limit of the V content is not particularly limited. From the viewpoint of obtaining the effects of V, the V content is preferably 0.01% or more, and more preferably 0.05% or more.

### <Co: 0.50% or less>

Co is an element that improves the strength of the stainless steel without impairing toughness thereof, and is contained in the stainless steel as necessary. However, when the Co content is excessively high, workability and toughness may decrease, and costs increase. Therefore, the Co content is 0.50% or less, preferably 0.40% or less. On the other hand, the lower limit of the Co content is not particularly limited. From the viewpoint of obtaining the effects of Co, the Co content is preferably 0.01% or more, and more preferably 0.05% or more.

### <W: 0.50% or less>

W is an element that improves the strength of the stainless steel without impairing toughness thereof, and is contained in the stainless steel as necessary. However, when the W content is excessively high, workability and toughness may decrease, and costs increase. Therefore, the W content is 0.50% or less, preferably 0.40% or less. On the other hand, the lower limit of the W content is not particularly limited. From the viewpoint of obtaining the effects of W, the W content is preferably 0.01% or more, and more preferably 0.05% or more.

### <Sn: 0.50% or less>

Sn is an element effective for improving corrosion resistance and electrical conductivity, and is contained in the stainless steel as necessary. However, when the Sn content is excessively high, toughness and workability decrease. Therefore, the Sn content is 0.50% or less, preferably 0.30% or less. On the other hand, the lower limit of the Sn content is not particularly limited. From the viewpoint of obtaining the effects of Sn, the Sn content is preferably 0.01% or more, and more preferably 0.05% or more.

### <Zr: 0.500% or less>

Zr is an element that fixes C to increase an effective Cr content of the stainless steel, and is contained in the stainless steel as necessary. However, when the Zr content is excessively high, workability of the stainless steel decreases. Therefore, the Zr content is 0.500% or less, preferably 0.400% or less. On the other hand, the lower limit of the Zr content is not particularly limited. From the viewpoint of obtaining the effects of Zr, the Zr content is preferably 0.001% or more, and more preferably 0.005% or more.

### <Ga: 0.050% or less>

Ga is an element that improves the hot workability of the stainless steel, and is contained in the stainless steel as necessary. However, when the Ga content is excessively high, manufacturability decreases. Therefore, the Ga content is 0.050% or less, preferably 0.030% or less. On the other hand, the lower limit of the Ga content is not particularly limited. From the viewpoint of obtaining the effects of Ga, the Ga content is preferably 0.001% or more, and more preferably 0.002% or more.

### <Hf: 0.10% or less>

Hf is an element that fixes C to increase an effective Cr content of the stainless steel, and is contained in the stainless steel as necessary. However, when the Hf content is excessively high, workability of the stainless steel decreases. Therefore, the Hf content is 0.10% or less, preferably 0.08% or less. On the other hand, the lower limit of the Hf content is not particularly limited. From the viewpoint of obtaining the effects of Hf, the Hf content is preferably 0.001% or more, and more preferably 0.005% or more.

### <REM: 0.10% or less>

REM (rare earth elements) preferentially bonds with S and P to form compounds, and therefore can suppress a decrease in the effect of suppressing thermal deformation caused by S and P. REM is contained in the stainless steel as necessary. However, when the REM content is excessively high, the stainless steel may harden, and toughness and workability may decrease. Therefore, the REM content is 0.10% or less, preferably 0.08% or less. On the other hand, the lower limit of the REM content is not particularly limited. From the viewpoint of obtaining the effects of REM, the REM content is preferably 0.001% or more, and more preferably 0.005% or more.

REM is a collective term for two elements, scandium (Sc) and yttrium (Y), and 15 elements from lanthanum (La) to lutetium (Lu) (lanthanoids). These may be used alone or as a mixture. Among REM, La and Y are preferred.

The stainless steel according to an embodiment of the present invention contains inclusions.

As used herein, the term "inclusions" means non-metallic inclusions such as oxides and carbonitrides.

The average particle diameter of the inclusions is from 0.2 µm to 3.0 µm, preferably from 0.5 µm to 2.8 µm, and more preferably from 0.8 µm to 2.5 µm.

Furthermore, the number density of the inclusions is from 30 to 150 particles/mm², preferably from 35 to 120 particles/mm², and more preferably from 40 to 100 particles/mm².

Furthermore, the aspect ratio of the inclusions is more than 1.0 and less than 3.0, preferably from 1.1 to 2.8, and more preferably from 1.2 to 2.5.

By controlling the average particle diameter, the number density, and the aspect ratio of the inclusions within the above ranges, oxidation and thermal deformation associated with proton (H⁺) penetration can be suppressed without decreasing properties such as workability.

Here, the average particle diameter, the number density, and the aspect ratio of the inclusions are measured in accordance with the microscopic test method defined in JIS G 0555: 2020. Specifically, the measurement is performed as follows:
First, a sample is taken by exposing any cross section (area of observation) parallel to the rolling direction of the stainless steel. Next, this cross section is mirror-polished, and the inclusions present on the polished cross section are identified using an optical microscope. The particle diameters of the identified inclusions are measured, and the average value thereof is taken as the average particle diameter of the inclusions.

Furthermore, the longest diameter and the shortest diameter of the inclusions are measured, a ratio of the longest diameter to the shortest diameter (longest diameter/shortest diameter) is calculated, and the average value thereof is taken as the aspect ratio of the inclusions.

Furthermore, the total number of inclusions in the area of observation is counted, and a value obtained by dividing the total number of inclusions by an area of the area of observation is taken as the number density of the inclusions.

The average particle diameter, the number density, and the aspect ratio of the inclusions can be measured using a commercially available automated inclusion analysis system in accordance with the microscopic test method defined in JIS G 0555: 2020.

The inclusions include Mg-containing inclusions having an Mg concentration of 0.5 mass% or more. The inclusions are not particularly limited, and examples thereof include oxide-based inclusions such as MgO (magnesium oxide) and MgO·Al₂O₃. The proportion of the Mg-containing inclusions (the number of Mg-containing inclusions/the total number of inclusions) among the inclusions (all inclusions) is 0.30 or more, preferably 0.32 or more, and more preferably 0.35 or more. By controlling the proportion of the Mg-containing inclusions within this range, a sufficient amount of Mg-containing inclusions functioning as proton trap sites can be present in the stainless steel, and therefore oxidation and thermal deformation in a high-temperature environment containing steam and hydrogen can be suppressed. The upper limit of the proportion of the Mg-containing inclusions is not particularly limited, but it is preferably 0.80 or less, more preferably 0.75 or less, and further preferably 0.70 or less.

Here, the identification of the Mg-containing inclusions can be performed by elemental analysis of the inclusions. Specifically, elemental analysis of the inclusions may be performed using EDX (energy dispersive X-ray spectroscopy) or the like. The identification of the Mg-containing inclusions may also be performed using a commercially available automated inclusion analysis system capable of elemental analysis.

It is preferable that a proportion of carbonitrides among the inclusions (the number of carbonitrides/the total number of inclusions) be from 0.40 to 0.80, more preferably from 0.40 to 0.75, and further preferably from 0.40 to 0.70. By controlling the proportion of carbonitrides within this range, the presence of carbonitrides makes it easier to suppress oxidation and thermal deformation in a high-temperature environment containing steam and hydrogen. Examples of carbonitrides include chromium carbides, chromium nitrides, carbides of Nb or Ti, and composite carbonitrides of these and nitrides.

Here, the identification of carbonitrides can be performed by elemental analysis of the inclusions as described above. In this elemental analysis, inclusions having an oxygen concentration of 0.5% or less are defined as carbonitrides.

The shape of the stainless steel according to an embodiment of the present invention is not particularly limited, but it is preferably a plate shape or a foil shape. When the stainless steel has a plate shape or a foil shape, a thickness thereof is, for example, from 0.1 mm to 5.0 mm, preferably from 0.1 mm to 3.0 mm, more preferably from 0.1 mm to 1.0 mm, and further preferably from 0.1 mm to 0.5 mm.

A method for producing the stainless steel according to an embodiment of the present invention is not particularly limited, provided that it is a method capable of producing a stainless steel having the above characteristics.

An example of a typical method for producing the stainless steel according to an embodiment of the present invention is described below. It should be noted that the method for producing the stainless steel according to an embodiment of the present invention is not limited to the production method described below.

The stainless steel according to an embodiment of the present invention can be produced by using a slab having the above composition and controlling a heating temperature during hot rolling to 1150°C or lower and a coiling temperature after hot rolling to 500°C or lower. By employing such conditions, the above-described inclusions can be formed in the stainless steel.

A slab having the above composition can be produced by melting and casting stainless steel. At this time, by increasing a cooling rate during casting, the above-described inclusions can be more easily formed.

The slab is then subjected to hot rolling. The hot rolling may be performed in accordance with known methods, provided that the heating temperature is 1150°C or lower. When the heating temperature is higher than 1150°C, the inclusions tend to coarsen, making it particularly difficult to obtain inclusions having a predetermined aspect ratio, and the amounts of Mg-containing inclusions and carbonitrides formed also decrease. The lower limit of the heating temperature is not particularly limited, but it is typically 1000°C or higher.

The hot-rolled material obtained by the hot rolling is coiled at a coiling temperature of 500°C or lower. When the coiling temperature is higher than 500°C, the amount of carbonitrides formed decreases. The lower limit of the coiling temperature is not particularly limited, but it is typically 300°C or higher.

The coiled hot-rolled material is annealed. The annealing conditions are not particularly limited, and annealing is performed in accordance with known methods. After annealing, pickling may be performed as necessary.

When the stainless steel is a cold-rolled material, the hot-rolled, annealed material obtained as described above is cold-rolled. The cold rolling conditions are not particularly limited, and cold rolling is performed in accordance with known methods. After cold rolling, annealing and/or pickling may be performed as necessary.

The stainless steel according to an embodiment of the present invention produced as described above can suppress oxidation and thermal deformation associated with proton (H⁺) penetration in a high-temperature environment containing steam and hydrogen. Therefore, this stainless steel is suitable for use in solid oxide water electrolysis.

When the stainless steel according to an embodiment of the present invention is used for solid oxide water electrolysis, the stainless steel can be used for various components such as separators, interconnects, and current collecting plates.

### [Examples]

The content of the present invention will be described below in detail with reference to Examples, but the present invention is not construed as being limited thereto.

A slab having the composition shown in Table 1 (the balance being Fe and impurities) was smelted, hot-rolled at the heating temperature shown in Table 2 to form a 4.0 mm hot-rolled sheet, and then coiled at the coiling temperature shown in Table 2. The coiled hot-rolled sheet was then annealed at 1000°C for 1 minute and pickled. The hot-rolled sheet was then cold-rolled to 2.0 mm, annealed at 980°C for 30 seconds, and pickled, and then cold-rolled (finish cold-rolled) to 0.5 mm, annealed at 950°C for 5 seconds, and pickled to obtain a cold-rolled, annealed sheet (stainless steel).

**[Table 1]**

| Steel Nos. | Composition (% by mass) | | | | | | | | | | | | | | |
|---|---|---|---|---|---|---|---|---|---|---|---|---|---|---|---|
| | C | Si | Mn | P | S | Cr | Mo | Al | Mg | N | Nb | Ti | Ni | Cu | Other |
| A | 0.003 | 0.18 | 0.05 | 0.028 | 3E-04 | 22.3 | 1.0 | 0.06 | 2E-04 | 0.009 | 0.21 | 0.22 | 0.30 | 0.20 | -- |
| B | 0.004 | 0.03 | 0.09 | 0.030 | 2E-04 | 19.2 | 2.3 | 0.11 | 6E-04 | 0.011 | 0.35 | 0.01 | 0.10 | 0.10 | Ca: 0.0018, V: 0.10 |
| | | | | | | | | | | | | | | | Co: 0.20, Sn: 0.05 |
| C | 0.012 | 0.09 | 0.25 | 0.015 | 3E-04 | 23.8 | 0.9 | 0.14 | 0.003 | 0.015 | 0.18 | 0.23 | 0.01 | 0.01 | B: 0.0005, Zr: 0.020 |
| | | | | | | | | | | | | | | | Ga: 0.010, Hf: 0.01 |
| D | 0.006 | 0.05 | 0.13 | 0.026 | 5E-04 | 22.1 | 1.2 | 0.09 | 1E-04 | 0.012 | 0.24 | 0.17 | 0.10 | 0.01 | B: 0.0002, V: 0.12 |
| | | | | | | | | | | | | | | | W: 0.10 |
| E | 0.008 | 0.11 | 0.17 | 0.035 | 0.001 | 21.2 | 0.3 | 0.04 | 5E-04 | 0.013 | 0.01 | 0.32 | 0.15 | 0.40 | B: 0.0004, REM 0.02 |
| F | 0.032 | 0.07 | 0.12 | 0.024 | 4E-04 | 22.2 | 1.1 | 0.09 | 3E-04 | 0.009 | 0.24 | 0.17 | 0.20 | 0.01 | -- |
| G | 0.008 | 0.22 | 0.13 | 0.026 | 3E-04 | 22.3 | 1.2 | 0.07 | 4E-04 | 0.013 | 0.23 | 0.18 | 0.10 | 0.01 | - |
| H | 0.008 | 0.11 | 0.31 | 0.026 | 5E-04 | 22.1 | 1.0 | 0.08 | 5E-04 | 0.010 | 0.22 | 0.19 | 0.30 | 0.01 | -- |
| I | 0.008 | 0.11 | 0.13 | 0.026 | 2E-04 | 18.8 | 0.2 | 0.11 | 2E-04 | 0.012 | 0.25 | 0.21 | 0.05 | 0.01 | -- |
| J | 0.008 | 0.11 | 0.13 | 0.026 | 3E-04 | 22.3 | 1.3 | 0.16 | 6E-04 | 0.014 | 0.21 | 0.22 | 0.13 | 0.01 | -- |
| K | 0.008 | 0.11 | 0.13 | 0.026 | 6E-04 | 22.4 | 1.1 | 0.09 | -- | 0.016 | 0.19 | 0.23 | 0.12 | 0.01 | -- |
| L | 0.010 | 0.15 | 0.14 | 0.025 | 4E-04 | 22.1 | -- | 0.08 | 4E-04 | 0.012 | 0.21 | 0.25 | 0.15 | 0.01 | -- |
| The underlines indicate that they are outside the scope of this invention. | | | | | | | | | | | | | | | |

**[Table 2]**

| Test Nos. | Steel Nos. | Heating Temperature during Hot Rolling (°C) | Coiling Temperature after Hot Rolling (°C) |
|---|---|---|---|
| 1 | A | 1150 | 500 |
| 2 | A | 1150 | 700 |
| 3 | A | 1200 | 650 |
| 4 | B | 1120 | 450 |
| 5 | C | 1150 | 400 |
| 6 | D | 1150 | 500 |
| 7 | D | 1150 | 600 |
| 8 | D | 1200 | 750 |
| 9 | D | 1270 | 850 |
| 10 | E | 1150 | 500 |
| 11 | F | 1150 | 500 |
| 12 | G | 1150 | 500 |
| 13 | H | 1150 | 500 |
| 14 | I | 1150 | 500 |
| 15 | J | 1150 | 500 |
| 16 | K | 1150 | 500 |
| 17 | L | 1150 | 500 |
| The underlines indicate that they are outside the scope of this invention. | | | |

The following evaluations were performed on each cold-rolled annealed sheet obtained as described above.

### (Average Particle Diameter, Number Density, and Aspect Ratio of Inclusions)

The average particle diameter, the number density, and the aspect ratio of inclusions were measured in accordance with the method described above.

Specifically, a sample was taken by exposing a cross section in a thickness direction (L cross section; area of observation) parallel to the rolling direction from the cold-rolled, annealed sheet, this cross section was mirror-polished, and the average particle diameter, the number density, and the aspect ratio of the inclusions present on the polished cross section were measured using an automated inclusion analysis system.

The automated inclusion analysis system used was Explorer 4 MQA (manufactured by Thermo Fisher Scientific), and the measurement area was 225 mm². The lower limit of the particle diameter of inclusions measured by this analyzer is approximately 0.2 µm.

### (Proportions of Mg-Containing Inclusions and Carbonitrides among the Inclusions)

The proportions of Mg-containing inclusions and carbonitrides among the inclusions were measured in accordance with the method described above.

Specifically, after identifying the inclusions using the automated inclusion analysis system as described above, elemental analysis of the inclusions was performed using EDX attached to this automated inclusion analysis system. Then, the number of Mg-containing inclusions having an Mg concentration of 0.5% or more was counted and divided by the total number of inclusions to calculate the proportion of Mg-containing inclusions among the inclusions. In the elemental analysis of inclusions by EDX, C, N, O, Mg, Al, Si, P, S, Ca, Ti, Cr, Mn, Fe, Ni, Cu, Nb, and Mo were the elements to be measured.

The proportion of carbonitrides was calculated by regarding inclusions having an oxygen concentration of 0.5% or less as carbonitrides, counting the number thereof, and dividing the number by the total number of inclusions.

### (Oxidation Resistance Test)

A sample having a diameter of 24 mm was cut out from the cold-rolled, annealed sheet and placed in the oxidation resistance test jig shown in Fig. 1. A gasket was disposed between the oxidation resistance test jig and the sample to ensure airtightness. An oxidation resistance test was conducted by circulating a mixed gas of 50 vol% hydrogen and 50 vol% steam through the flow path in the oxidation resistance test jig at 650°C for 1000 hours, as shown in Fig. 1. After the oxidation resistance test, abnormal oxidation was evaluated in a region having a diameter of 15 mm on an air-side surface of the sample.

In this evaluation, a case where no nodular oxides were observed was represented as A (no abnormal oxidation occurred), a case where nodular oxides were observed but at two or fewer points was expressed as B (less abnormal oxidation), and a case where nodular oxides were observed at more than two points or thick scale had formed was expressed as C (more abnormal oxidation).

### (Thermal Deformation Test)

Thermal deformation of the cold-rolled, annealed sheet was evaluated by a high-temperature flexural strength test method defined in JIS R 1604: 2008. Specifically, a three-point bending method with an outer span distance of 30 mm was employed, and a test specimen of 4 mm × 40 mm was prepared by cutting the stainless steel. The test specimen and a three-point bending tester were then placed in a muffle furnace, and heated at 650°C in air, and the flexural strength at which thermal deformation occurred in the test specimen was then measured. A case where the flexural strength was 150 MPa or more was expressed as A (higher effect of suppressing thermal deformation), and a case where the flexural strength was less than 150 MPa was expressed as C (lower effect of suppressing thermal deformation).

Table 3 shows the above evaluation results.

**[Table 3]**

| Test Nos. | Steel Nos. | Inclusions | | | | | Oxidation Resistance Test | Thermal Deformation Test | Category |
|---|---|---|---|---|---|---|---|---|---|
| | | Average Particle Diameter (µm) | Number Density (particles/mm²) | Aspect Ratio | Proportion of Mg-Containing Inclusions | Proportion of Carbonitrides | | | |
| 1 | A | 1.3 | 65 | 1.8 | 0.45 | 0.50 | A | A | Inventive Examples |
| 2 | A | 1.5 | 60 | 1.7 | 0.40 | 0.35 | B | A | Inventive Examples |
| 3 | A | 2.5 | 40 | 3.2 | 0.25 | 0.30 | C | c | Comp. |
| 4 | B | 1.6 | 70 | 1.6 | 0.50 | 0.60 | A | A | Inventive Examples |
| 5 | C | 1.8 | 75 | 1.8 | 0.60 | 0.70 | A | A | Inventive Examples |
| 6 | D | 1.4 | 60 | 1.8 | 0.40 | 0.40 | A | A | Inventive Examples |
| 7 | D | 1.6 | 65 | 1.8 | 0.40 | 0.35 | B | A | Inventive Examples |
| 8 | D | 2.2 | 50 | 3.0 | 0.20 | 0.30 | C | C | Comp. |
| 9 | D | 3.2 | 28 | 1.5 | 0.30 | 0.40 | C | C | Comp. |
| 10 | E | 1.9 | 65 | 1.8 | 0.50 | 0.60 | A | A | Inventive Examples |
| 11 | F | 1.5 | 65 | 1.7 | 0.45 | 0.50 | C | C | Comp. |
| 12 | G | 1.6 | 60 | 1.8 | 0.50 | 0.60 | B | C | Comp. |
| 13 | H | 1.4 | 70 | 1.6 | 0.65 | 0.50 | C | c | Comp. |
| 14 | I | 1.5 | 60 | 1.9 | 0.45 | 0.60 | C | C | Comp. |
| 15 | J | 1.7 | 65 | 1.8 | 0.60 | 0.40 | B | C | Comp. |
| 16 | K | 1.5 | 75 | 1.8 | 0.50 | 0.50 | B | C | Comp. |
| 17 | L | 2.0 | 40 | 3.0 | 0.25 | 0.30 | C | C | Comp. |
| The underlines indicate that they are outside the scope of this invention. | | | | | | | | | |

As shown in Table 3, the cold-rolled, annealed sheets of Test Nos. 1, 2, 4 to 7, and 10 (Inventive Examples) exhibited good results in the oxidation resistance test and the thermal deformation test because the composition and the state of the inclusions were appropriate.

In contrast, the cold-rolled, annealed sheets of Test Nos. 3 and 8 (Comparative Examples) had the larger aspect ratio of inclusions and the smaller amount of Mg-containing inclusions because the heating temperature during hot rolling and the coiling temperature after hot rolling were excessively high. Furthermore, the cold-rolled, annealed sheet of Test No. 17 (Comparative Example) did not contain Mo, and therefore the aspect ratio of the inclusions was larger and the amount of Mg-containing inclusions was smaller. For this reason, the results of the oxidation resistance test and the thermal deformation test were poor.

The cold-rolled, annealed sheet of Test No. 9 (Comparative Example) had the larger average particle diameter of the inclusions and the lower number density thereof because the heating temperature during hot rolling and the coiling temperature after hot rolling were excessively high. For this reason, the results of the oxidation resistance test and the thermal deformation test were poor.

The cold-rolled, annealed sheets of Test Nos. 11 to 16 (Comparative Examples) had inappropriate compositions, and therefore at least one of the results of the oxidation resistance test and the thermal deformation test was poor.

As can be seen from the above results, according to the present invention, it is possible to provide a stainless steel for solid oxide electrolysis cells that can suppress oxidation and thermal deformation associated with proton (H⁺) penetration.

Therefore, an embodiment of the present invention can have the following aspects.
<1> A stainless steel for solid oxide electrolysis cells, comprising, on a mass basis, C: 0.030% or less, Si: 0.20% or less, Mn: less than 0.30%, P: 0.050% or less, S: 0.0030% or less, Cr: from 19.0% to 24.0%, Mo: 2.5% or less, Al: from 0.01% to 0.15%, Mg: from 0.0001% to 0.0100%, N: 0.030% or less, Nb: 0.40% or less, Ti: 0.40% or less, Ni: 1.00% or less, and Cu: 1.00% or less, with the balance being Fe and impurities,
   wherein an average particle diameter of inclusions is from 0.2 µm to 3.0 µm,
   a number density of the inclusions is from 30 to 150 particles/mm²,
   an aspect ratio of the inclusions is more than 1.0 and less than 3.0, and
   a proportion, among the inclusions, of Mg-containing inclusions having an Mg concentration of 0.5 mass% or more is 0.30 or more.
<2> The stainless steel for solid oxide electrolysis cells according to <1>, further comprises, on a mass basis, one or more selected from B: 0.0050% or less, Ca: 0.0100% or less, V: 0.50% or less, Co: 0.50% or less, W: 0.50% or less, Sn: 0.50% or less, Zr: 0.500% or less, Ga: 0.050% or less, Hf: 0.10% or less, and REM: 0.10% or less.
<3> The stainless steel for solid oxide electrolysis cells according to <1> or <2>, wherein a proportion of carbonitrides among the inclusions is from 0.40 to 0.80.
<4> The stainless steel for solid oxide electrolysis cells according to any one of <1> to <3>, wherein the stainless steel is used for one or more components selected from a separator, an interconnect, and a current collecting plate.

## Claims

1. A stainless steel for solid oxide electrolysis cells, comprising, on a mass basis, C: 0.030% or less, Si: 0.20% or less, Mn: less than 0.30%, P: 0.050% or less, S: 0.0030% or less, Cr: from 19.0% to 24.0%, Mo: 2.5% or less, Al: from 0.01% to 0.15%, Mg: from 0.0001% to 0.0100%, N: 0.030% or less, Nb: 0.40% or less, Ti: 0.40% or less, Ni: 1.00% or less, and Cu: 1.00% or less, with the balance being Fe and impurities,
wherein an average particle diameter of inclusions is from 0.2 µm to 3.0 µm,
a number density of the inclusions is from 30 to 150 particles/mm²,
an aspect ratio of the inclusions is more than 1.0 and less than 3.0, and
a proportion, among the inclusions, of Mg-containing inclusions having an Mg concentration of 0.5 mass% or more is 0.30 or more.

2. The stainless steel for solid oxide electrolysis cells according to claim 1, further comprising, on a mass basis, one or more selected from B: 0.0050% or less, Ca: 0.0100% or less, V: 0.50% or less, Co: 0.50% or less, W: 0.50% or less, Sn: 0.50% or less, Zr: 0.500% or less, Ga: 0.050% or less, Hf: 0.10% or less, and REM: 0.10% or less.

3. The stainless steel for solid oxide electrolysis cells according to claim 1 or 2, wherein a proportion of carbonitrides among the inclusions is from 0.40 to 0.80.

4. The stainless steel for solid oxide electrolysis cells according to claim 1 or 2, wherein the stainless steel is used for one or more components selected from a separator, an interconnect, and a current collecting plate.
